# EUROPEAN PATENT APPLICATION

(11) **EP 4 600 435 A1**
(43) Date of publication of application: **13.08.2025**
(21) Application number: 25156210.4
(22) Date of filing: 06.02.2025
(51) Int. Cl.: E04D 1/30, F24S 25/61

(54) **FLASHING PANEL FOR TILED ROOF**

(30) Priority: 06.02.2024 GB 202401563
(71) Applicant: Hallclip Limited, Chorley PR7 5TL (GB)
(72) Inventor: HALL, James, Chorley, PR7 5TL (GB)
(74) Representative: Appleyard Lees IP LLP

(57) **Abstract**

There is disclosed a flashing panel for covering an interruption in an interrupted tile layer of a tiled roof, the interruption being where a portion of a tile of the interrupted tile layer is removed, the flashing panel comprising: a panel base comprising a first base section and a second base section; and an offset portion connecting the first base section to the second base section, wherein: the offset portion is configured to extend away from the panel base; the flashing panel is firm; and the panel base is configured to lie on the interrupted tile layer, the offset portion is configured to be positioned in the interruption of the interrupted tile layer such that the offset portion lies closer to a lower tile layer than the panel base, the interrupted tile layer overlaid on and in contact with the lower tile layer.

## Description

The present disclosure relates to a flashing panel for covering an interruption in an interrupted tile layer of a tiled roof. The present disclosure also relates to a method for installing a flashing panel.

### Background

Solar panels are often installed to tiled roofs via brackets that are fixed to a portion of the roof frame. For example, the roof frame comprises rafters which are typically arranged to align with the angle of the roof, and battens which are arranged perpendicular to the rafters. A bracket may be fixed to a rafter of the roof directly, or to a rafter through a batten of the roof frame. A rail may then be mounted on the brackets for the solar panels to be installed on the rails.

Tiled roofs comprise tiles which may be made from concrete, clay, or other building materials suitable for roofing tiles. For example, the tiles are laid in an overlapping manner atop the roof frame. For example, the overlap aides in inhibiting the ingress of water into the roof past the tiles. For example, to drain water away safely, the tiles may be double lapped such that at any point of the roof, there is at least a double layer of the tiles.

Solar panels are a relatively recent development, and as such they may not have been installed onto buildings during construction. As such, solar panels may often be installed onto roofs a time after construction of the building in question. It will be understood that when retrofitting solar panels onto an already constructed roof, it is important that the roof retains its integrity. For example, it would be disadvantageous if after installation, water, snow, and the like could significantly more easily penetrate the tiles. The same is true for the installation of any structure (not just solar panels) onto a roof. Therefore, it is common for a cover of thin material (such as a flashing element) to be installed close to the joints between the roof and any roof features such as sky lights, chimneys or in the case of brackets of the kind used to install solar panels, to inhibit ingress, for example of rain or snow, at the location of the installation. This protects against corrosion, leaking, wood rot and other water damage.

Flashing elements are available to cover an exposed portion of the roof frame to protect against wind and water at the sites where brackets have been installed. However, certain flashing elements do not provide a close fit to the tiles in the vicinity of the installed bracket, even though a close fit would be of greater advantage in protecting against wind and rain. Other flashing elements known in the art may be difficult or time consuming to install. Accordingly, it would be advantageous to provide a kind of flashing element which improves upon the protection provided at the site of installation of the bracket, while also being convenient and quick to install.

### Summary

According to a first aspect of the present disclosure, there is provided a flashing panel for covering an interruption in an interrupted tile layer of a tiled roof, the interruption at which a portion of a tile of the interrupted tile layer is removed, the flashing panel comprising: a panel base comprising a first base section and a second base section; and an offset portion connecting the first base section to the second base section, wherein: the offset portion is configured to extend away from the panel base; the flashing panel is firm; and the panel base is configured to lie on top of and contact the interrupted tile layer, the offset portion is configured to be positioned in the interruption of the interrupted tile layer such that the offset portion lies closer to a lower tile layer than the panel base, the interrupted tile layer overlaid on and in contact with the lower tile layer.

For example, the interruption is created (for example, by cutting a tile from the interrupted tile layer) in order that the bracket can be positioned as desired with a part of the bracket being positioned in the space corresponding to the interruption and/or to expose a region of the roof frame so that the bracket can be installed. Advantageously, because the offset portion is configured to be positioned in the interruption of the interrupted tile layer such that the offset portion lies closer to a lower tile layer than the panel base, the offset portion does not occupy significant space above the interrupted tile layer. This means that the flashing panel may be accommodated without requiring cuts to be made to tiles which are overlaid on the interrupted tile layer. For example, only the creation of the interruption in the interrupted tile layer may be required, and further cuts/portion removal in the tiles which lie above/on top of the interrupted tile layer may not be needed. For example, this makes installation significantly more efficient than certain prior art methods and components.

Advantageously, the flashing panel being firm provides for easy/convenient installation as compared to handling a more flexible flashing element. For example, a flexible flashing element requires more care and handling to be position as desired and also to be positioned flatly (e.g., without wrinkles and the like) on the tiles. Furthermore, the panel base contacts the interrupted tile layer, whereas the offset portion contacts the exposed tile layer underneath. This provides that the flashing panel is formed to match the shape formed by the interrupted tile layer, thereby providing for easy installation, as compared to attempting to mould a flexible flashing to said shape by hand, for example. Various other advantages will become apparent from the following detailed description.

Optionally, a contact side facing a direction in which the offset portion extends away from the panel base, wherein: the flashing panel is configured such that substantially all of the contact side contacts the tiled roof.

Advantageously, such contact provides a close-fitting flashing which effectively hugs/contacts the tiled surface which it covers. This means that gaps between the flashing panel and the tiled surface are minimized, thereby providing better protection against wind and rain, for example.

Optionally, the flashing panel is configured with a complementary curvature corresponding to a tile curvature of tiles of the tiled roof.

Advantageously, the complementary curvature improves contact between the flashing panel and the relevant tiles, thereby providing better protection against the elements. In some examples, the complementary curvature may provide that substantially all of the contact side contacts the tiled roof.

Optionally, the flashing panel comprises a hook arrangement configured to hook a tile edge of the tiled roof.

Advantageously, the hook arrangement allows engagement with a tile edge so as to hold the flashing panel in place. For example, by virtue of the hook arrangement, it may not be required to apply adhesive, deploy fixings such as screws and nails, and/or the like. Thus, installation may be simplified and made more efficient.

Optionally, the hook arrangement is configured to support the flashing panel against gravity when the hook arrangement hooks the tile edge of the tiled roof.

Advantageously, the hook arrangement can inhibit the flashing panel from sliding down the tiled roof, which is typically sloped. Therefore, the flashing panel can be retained in position.

Optionally, the hook arrangement comprises a first hook structure provided on the first base section, and a second hook structure provided on the second base portion.

Advantageously, a respective structure is provided on each of the first and second base sections either side of the offset portion. Therefore, the flashing panel can be supported in a manner so as to inhibit undesired orientation changes. For example, when supported along both base sections, the flashing panel is less likely to twist to an undesired angle.

Optionally, the flashing panel comprises an injection mouldable material which has been cured.

Advantageously, injection moulding may allow the flashing panel to be provided in a desired shape and dimension. For example, this is a manner in which a firm flashing panel may be provided. As such, the flashing panel is ready for use without requiring modifications such as cutting to a desired shape and the like.

Optionally, the offset portion extends from a first end of the flashing panel to a second end of the flashing panel. Advantageously, the offset portion spans an entire length of the flashing panel, simplifying its structure.

Optionally, each of the first base section and the second base section is a right trapezoid shape. Advantageously, such a shape may be used to reduce an exposed amount of the flashing panel not directly held down by an overlaid tile. Such a configuration may reduce the likelihood of the flashing panel being lifted by the wind, for example.

Optionally, the flashing panel is configured to remain in place between adjacent tile layers when the hook arrangement is hooked onto a tile edge of the tiled roof. Advantageously, the flashing panel is configured to remain in place by virtue of its own structure, thereby reducing the need for other fixings.

According to a second aspect of the present disclosure, there is provided a method for installing a flashing panel onto a tiled roof at a location of a solar panel bracket, the method comprising: installing the solar panel bracket by fixing the solar panel bracket directly to a rafter of the tiled roof, the solar panel bracket comprising an elongate portion; creating an interruption in a tile layer of the tiled roof, which tile layer lies in a same plane as at least a part of the elongate portion, the interruption being created by removing a portion of a tile to create an interrupted tile layer, the portion having a width greater than or equal to a width of the elongate portion; positioning, underneath the elongate portion, the flashing panel to cover the interruption and a region of the interrupted tile layer adjacent to the interruption. The flashing panel involved in the method according to the second aspect is the flashing panel according to the first aspect.

Advantageously, there is provided a method for installing the flashing panel so as to realize the advantages of the flashing panel.

Optionally, the method according to the second aspect comprises removing an overlapping tile from an upper tile layer which overlays and contacts the tile layer in which the interruption is to be created, prior to installing the solar panel bracket. Advantageously, appropriate access is gained to the roof frame in order for the bracket and the flashing panel to be installed.

Optionally, the method according to the second aspect comprises replacing the overlapping tile after the flashing panel has been positioned to cover the interruption.

Advantageously, the overlapping tile is placed atop the flashing panel and assists in holding the flashing panel in place.

Optionally, in the method according to the second aspect, the flashing panel is positioned by the offset portion being slid underneath the elongate portion of the solar panel bracket. Advantageously, this makes for easy and convenient installation of the flashing panel, which can be installed before or after the bracket.

Optionally, in the method according to the second aspect, positioning the flashing panel comprises engaging a hook arrangement of the flashing panel to a top edge of the interrupted tile layer.

Advantageously, the flashing panel is therefore held in place by virtue of features already part of the flashing panel, and adhesives and/or fixings may not be required, making installation faster and more efficient.

### Brief Description of the Drawings

Examples of the present disclosure will now be described with reference to the accompanying drawings, in which:
Figure 1 is a schematic perspective view of a flashing panel, according to examples;
Figure 2 is a schematic front view of the flashing panel, according to examples;
Figure 3 is a schematic side view of the flashing panel, according to examples;
Figure 4 is a schematic side cross-sectional view of the flashing panel, according to examples;
Figure 5 is a schematic plan view of the flashing panel, according to another set of examples;
Figure 6 is a schematic partial plan view of an interrupted tile layer, according to examples;
Figure 7 is a schematic side view showing the interrupted tile layer, according to examples;
Figure 8 is a schematic side view of a first tile and the flashing panel, according to examples;
Figure 9 is a flow diagram illustrating a method of installing a flashing panel, according to examples;
Figure 10 is a schematic plan view of the flashing panel of Figure 5 in the process of installation, according to examples;
Figure 11 is a schematic plan view of the flashing panel of Figure 5 after installation in its in use position, according to examples;
Figure 12 is a first schematic perspective view of the of the flashing panel having right trapezoid base portions, according to examples;
Figure 13 is a second schematic perspective view of the flashing panel having right trapezoid base portions, according to examples;
Figure 14 is a third schematic per perspective view of the flashing panel having right trapezoid base portions, according to examples; and
Figure 15 is a fourth schematic per perspective view of the flashing panel having right trapezoid base portions, according to examples.

### Detailed Description

The present disclosure relates to a flashing panel for covering an interruption in an interrupted tile layer of a tiled roof. The interruption is where a portion of a tile of the interrupted tile layer is removed. The flashing panel comprises a panel base comprising a first base section and a second base section, and an offset portion connecting the first base section to the second base section. The offset portion is configured to extend away from the panel base. The flashing panel is firm. Furthermore, the panel base is configured to lie on top of and to contact the interrupted tile layer, the offset portion is configured to be positioned in the interruption of the interrupted tile layer such that the offset portion lies closer to a lower tile layer than the panel base, the interrupted tile layer overlaid on and in contact with the lower tile layer.

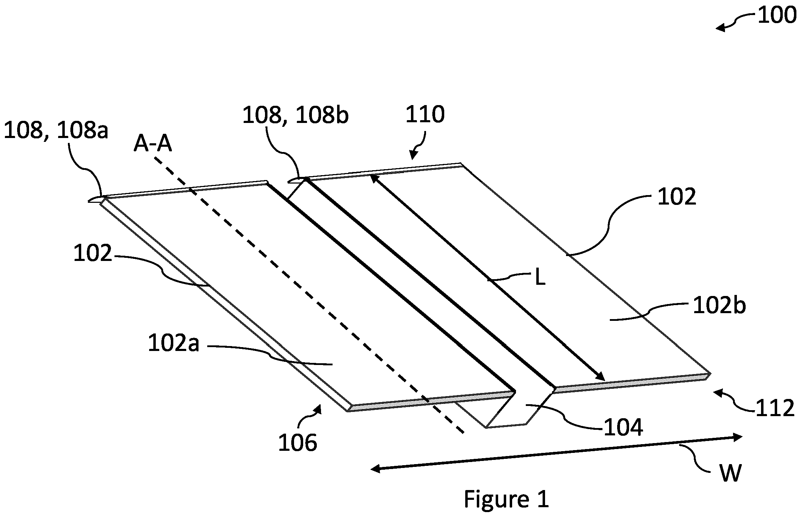

Figure 1 is a schematic perspective view of a flashing panel 100, according to examples. Those skilled in the art will appreciate that the flashing panel 100 may also be referred to as a flash, a cover, a solar flash, or flashing. It should be noted that to flash a joint means to make said joint watertight with flashing. The flashing panel 100 is for providing flashing to an exposed region of the roof frame (in the context of installing brackets for solar panels) to inhibit, for example, ingress of rainwater. Therefore, the flashing panel 100 may interchangeably be referred to as the flash 100.

In these examples, the flashing panel 100 comprises the panel base 102. The panel base 102 comprises the first base section 102a, and the second base section 102b. In these examples, the flashing panel comprises the offset portion 104, as shown. The offset portion 104 connects the first base portion 102a and the second base portion 102b. For example, the first base section 102a, the offset portion 104 and the second base section 102b may form a continuous structure. In other words, the flashing panel 100 may be a mono-structure in the sense that the first base section 102a, the offset portion 104 and the second base section 102b are integral with one another.

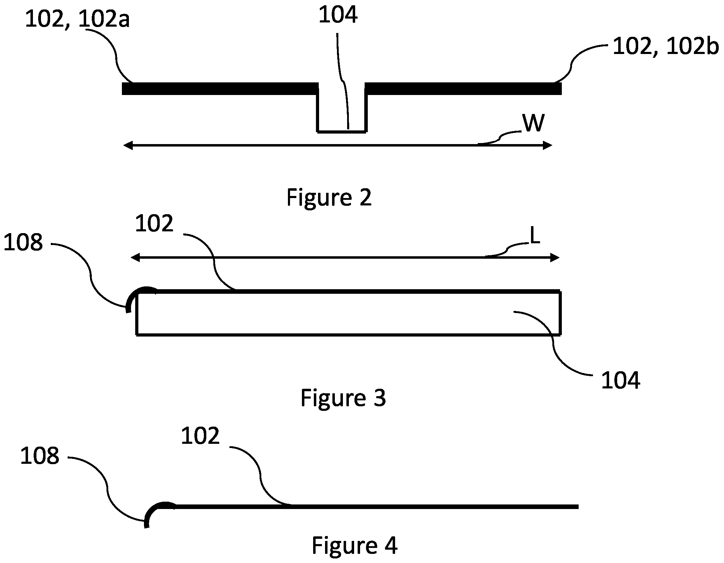

Figure 2 is a schematic front view of the flashing panel 100, according to examples. It can be seen from the examples of Figure 2 that the offset portion is configured to extend away from the panel base 102. Figure 3 is a schematic side view of the flashing panel 100, according to examples. Figure 4 is a schematic side cross-sectional view of the flashing panel along line A-A shown in Figure 1, according to examples.

In some examples, such as those shown in Figure 1, the offset portion 104 extends from a first end 110 of the flashing panel 100 to a second end 112 of the flashing panel 100. For example, the offset portion 104 may span an entire length from the first end 110 to the second end 112 of the flashing panel 100. The length of the flashing panel is indicated by double sided arrow L. For example, the length L may be selected to match a corresponding length of the tiles on which the flashing panel 100 is intended to be overlaid.

As described above, tiled roofs comprise tiles which may be made from concrete, clay, or other building materials suitable for roofing tiles. In some examples, the tiles may comprise metal, for example corrosion resistant metals such as stainless steel, galvanised steel, copper and the like. The tiles may also be provided in various geometries. For example, the tiles may have a square profile, a rectangular profile, or may be beaver tail tiles. Those skilled in the art will appreciate that beaver tail tiles typically have a rounded side and a distinctive look. In some examples, the tiles may have various degrees of curvature as part of their design. The flashing panel 100 may be dimensioned and otherwise configured to be deployed on various kinds of tiles, such as those mentioned herein, and others.

In some examples, the length L is between 250 millimetres and 430 millimetres. In some such examples, the length L is 270 millimetres. The width of the flashing panel 100 is indicated by double sided arrow W. For example, the width W may be selected to be large enough so as to significantly inhibit the likelihood of penetration by the elements via the interruption in the interrupted tile layer. In some examples, the width W is between 270 millimetres and 290 millimetres. In some such examples, the width W is 282 millimetres. However, these values of length L and width W are examples, and these dimensions may be selected in accordance with the type of tiles with respect to which the flashing panel 100 is to be deployed. For example, the length L and/or width W may be selected differently for beaver tail tiles as compared rectangular profile tiles. For clarity, the width W and length L are dimensions of the flashing panel 100 perpendicular to the direction in which the offset portion 104 extends away from the panel base 102.

In examples, the flashing panel 100 is firm. For example, the flashing panel 100 generally holds its shape. For example, the flashing panel may not flex, bend, or wilt under the force of gravity when held only by a corner and the like. For example, the flashing panel 100, as supplied post manufacture, is firm such that it is not suitable for being moulded into a shape against another element by hand. Advantageously, the flashing panel 100 is supplied ready for installation. This is in contrast to, for example, a flexible sheet material to be used as flashing which has to be cut to the appropriate size and shape, and then carefully handled and moulded around the interruption. Having a flashing panel ready to be positioned without the need for cutting etc, provides for efficient installation. Handling is also made easier because the firm flashing panel 100 does not lose its shape during installation.

In some examples, the flashing panel comprises an injection mouldable material which has been cured. For example, the injection mouldable material may be placed in a suitable mould and cured to thereby produce the flashing panel 100 as a singular piece. In this manner, the flashing panel may be produced with the desired dimensions and shape such that a user does not need to perform modifications (such as cutting to the desired size, shape and the like) during installation. In addition, these methods of production may provide firmness to the flashing panel. For example, the flashing panel 100 may thereby be manufactured to be rigid enough so as not to wilt and the like while being positioned, etc.

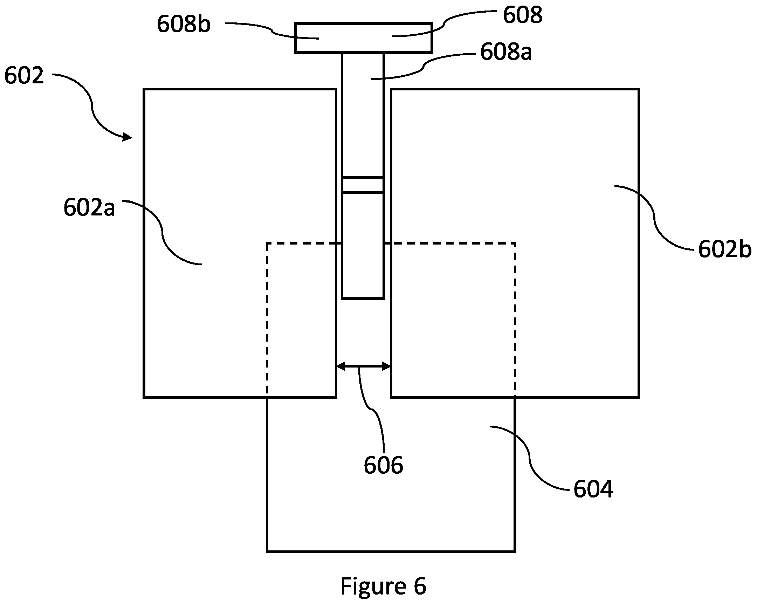

In examples, the panel base 102 is configured to lie on the interrupted tile layer. Figure 6 is a schematic plan view showing an interrupted tile layer 602. For example, the roof in question may be built up from rows of tiles laid side by side. In the examples of Figure 6, only two of the tiles of the interrupted tile layer 602 are shown. It should be noted that, in examples, there may be additional tiles to the left and/or to the right of the tiles of the interrupted tile layer 602 shown.

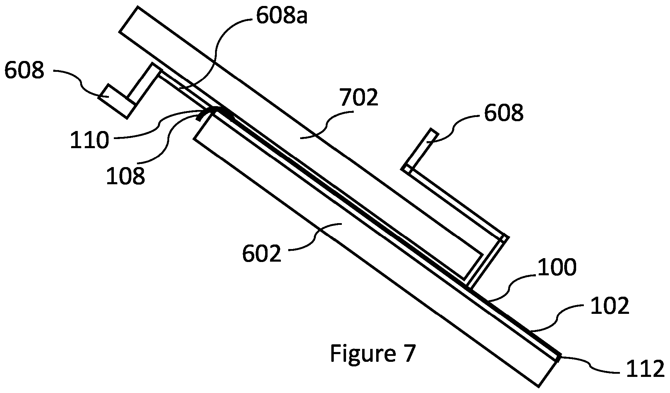

In these examples, there is a first tile 602a and a second tile 602b, both belonging to the interrupted tile layer 602. The interrupted tile layer 602 is overlaid on and in contact with a lower tile layer 604. Only one tile belonging to the lower tile layer 604 is shown for simplicity. As described above, to drain water away safely, the tiles may be double lapped such that at any point of the roof, there is at least a double layer of the tiles. As can be seen from Figure 6 and Figure 7 (introduced further below), the tiles of these examples are in a double lapped pattern. For example, there is a large overlap between the lower tile layer 604 and the interrupted tile layer 602, and the centre of a tile of the lower tile layer 604 is aligned with a meeting position of adjacent tiles of the interrupted tile layer (as can be seen from Figure 6). Furthermore, there is a large overlap between the interrupted tile layer and an upper tile layer 702 shown in Figure 7. Accordingly, there is provided an overlap (headlap) between the upper tile layer 702 and the lower tile layer 602 so as to form the double lapped pattern.

In these examples, there is an interruption 606 (as indicated by a double-sided arrow in Figure 6) between the first tile 602a and the second tile 602b. In some examples, such an interruption is created by removing a portion of a tile. In the case of Figure 6, a portion of the first tile 602a has been removed to create the interruption 606 between the first tile 602a and the second tile 602b.

The purpose of the interruption 606 is that a portion of a bracket 608 can be positioned between the first and second tiles 602a, 602b. It may be desired that a portion of the bracket 608 lies in the same plane as a portion of the interrupted tile layer 602.

Figure 7 is a schematic side view showing the interrupted tile layer 602, according to examples. For example, there may be another tile layer 702 overlaid on top of and in contact with the interrupted tile layer 602, as shown in Figure 7. Said another tile layer 702 may also be referred to as an upper tile layer 702. It should be noted that the upper tile layer 702 is "upper" in the sense that it is overlaid on top of the interrupted tile layer 602, but it not necessarily the topmost tile layer of the roof (although in some examples, it may be the topmost tile layer).

For example, relevant tiles from the upper tile layer 702 may be removed to allow for the installation of the bracket 608, and said relevant tiles may subsequently be reinstalled. In these examples, the bracket 608 comprises an elongate portion 608a which is positioned underneath the upper tile layer 702. Therefore, the interrupted tile layer 602 lies in the same plane as at least a part of the elongate portion 608a. To accommodate the elongate portion 608a of the bracket 608, the interruption is created.

As described, the offset portion 104 of the flashing panel 100 is configured to be positioned in the interruption 606 of the interrupted tile layer 602 such that the offset portion 104 lies closer to the lower tile layer 604 than the panel base 602. As can be seen from Figure 7, the panel base 102 is configured to lie on top of and to contact the interrupted tile layer 602. Depending on the amount of offset of the offset portion 604, the offset portion 604 may or may not directly contact the lower tile layer 604. In some examples, the offset is configured such that the offset portion 104 contacts the lower tile layer 604.

In some examples, the flashing panel 100 comprises a contact side 106, wherein the flashing panel 100 is configured such that substantially all of the contact side 106 contacts the tiled roof. In these examples, the contact side 106 faces a direction in which the offset portion 104 extends away from the panel base 102. In other words, the contact side 106 is the side of the flashing panel 100 which faces the tiles. In some examples, such as those in which the offset is configured such that the offset portion 104 contacts the lower tile layer 604, the contact side 106 includes a surface of the offset portion 104 which faces away from the panel base 102.

Referring again to Figure 6, it can be seen that because of the creation of the interruption 606, the roof frame (not shown) underneath the tiles is more exposed to the elements. The greater the surface area of contact between the flashing panel 100 and the tiles, the fewer/smaller the gaps there are between the flashing panel 100 and the tiles through which the elements (wind, rain and the like) can penetrate through to the roof frame (the rafters and batten of the roof, or further into the structure in question). Therefore, greater contact between the flashing panel 100 and the tiles is advantageous.

In some examples, the flashing panel is configured with a complementary curvature corresponding to a tile curvature of tiles of the tiled roof. For example, the curvature is such that contact between the contact side 106 and the tiled roof is increased in comparison to the flashing panel 100 being linear such that the panel base 102 is planar.

For example, the flashing panel is considered to be linear when the panel base is planar/flat and the contact side of the offset portion 104 is also planar/flat. However, when configured to have a curvature, the contact side of the panel base 102 and the contact side of the offset portion 104 are not flat.

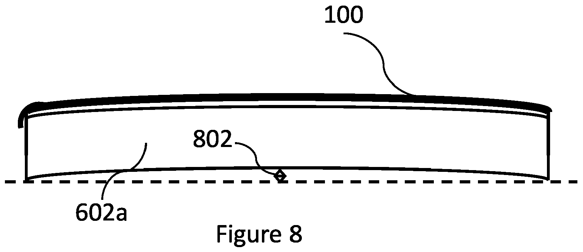

Figure 8 is a schematic side view of the first tile 602a and the flashing panel 100, according to examples. In these examples, the first tile 602a has a slight curvature as seen by comparison to the straight dashed line provided in Figure 8 for reference. In the examples of Figure 8, the flashing panel 100 has the same curvature as the first tile 602a so that, for example, the panel base 102 contacts the top surface of the first tile 102a to a great degree. In some examples, the curvature is such that a distance 802 between the centre of the tile/panel base 102 (in the orientation of Figure 8) and the straight dashed line touching the edges of the tile/panel base is between 4 millimetres and 10 millimetres, preferably 6 millimetres. Advantageously, providing the flashing panel 100 with a curvature matching the curvature of the tiles which the flashing panel 100 contacts, improves (within acceptable/reasonable tolerances) the amount of contact between the flashing panel 100 and the tiles, thereby providing better protection against the elements.

In some examples, the flashing panel 100 comprises a hook arrangement 108 configured to hook a tile edge of the tiled roof. In some examples, the hook arrangement 108 comprises one or more structures which curve past the panel base 102 in the direction of the offset portion 104. For example, the hook arrangement 108 may be formed by an extension/protrusion from the panel base 102 which has a curvature greater than any curvature of the panel base 102 itself. For example, the hook arrangement 108 is a structure which protrudes from an end of the panel base. In some examples, the hook arrangement 108 is configured to hook a tile edge of the tiled roof.

Referring to the examples of Figure 7, it will be understood that the tiled roof has a downwards slope, on which a slope of the overlapping pattern (e.g., the double lapped pattern) of the tiles is created. In these examples, the second end 112 of the flashing panel 100 is to be positioned as the lowest (relative to the ground) part of the flashing panel 100, in use. For example, the second end 112 is to be the lowermost edge of the flashing panel 100. On the other hand, the first end 110 is to be the topmost end, as shown in the examples of Figure 7.

For example, the hook arrangement 108 is provided at the first end 110 of the flashing panel 100. As referred to herein, a tile edge is a portion of a tile substantially parallel to the thickness (smallest spatial dimension) of said tile. In these examples, the hook arrangement 108 hooks onto a topmost edge 704 of the tiles of the interrupted tile layer 602. By virtue of being hooked in this manner, the flashing panel 100 is supported against sliding down the slope of the roof (e.g., due to gravity) and out of the desired position.

In some examples, the flashing panel 100 is configured to remain in place between adjacent tile layers when the hook arrangement 108 is hooked onto a tile edge of the tiled roof. In the examples of Figure 7, the adjacent layers are the interrupted tile layer 602 and the upper tile layer 702. In these examples, the tiles of the upper tile layer 702 which lie on top of the flashing panel 100 after installation inhibit the hook arrangement 108 from unhooking from the topmost edge 704 of the relevant tiles of the interrupted tile layer 602. In the examples of the figures, this is the manner in which the hook arrangement 108 is configured to hook a tile edge of the tiled roof and to maintain the flashing panel 100 in place.

In some examples, there may be provided other means of holding the flashing panel 100 in place, in addition to, or as an alternative to the hook arrangement 108. For example, at least a part of the contact side 106 of the flashing panel 100 may be provided with adhesive, or adhesive may be applied to at least a part of the contact side during installation. In some examples, there may be provided one or more extension portions extending from the panel base 102 at the first end 110. Such extension portions may be fixed to a rafter and/or a batten of the roof frame with fixings such as nails, screws and the like.

In some examples, the hook arrangement 108 comprises a first hook structure 108a provided on the first base section 102a, and a second hook structure 108b provided on the second base section 102b. In these examples, the offset portion 104 forms a channel from the first end 110 to the second end 112 of the flashing panel 100 which is not obstructed by another structure of the flashing panel 100. Advantageously, providing the first and second hook structures 108a, 108b either side of the offset portion 104 inhibits the flashing panel tilting to an undesired angle, for example.

In the examples of Figure 1, the hook structures 108a, 108b are shown to span the entire width (dimension parallel to the width W) of each respective base section 102a, 102b. However, in other example, the hook structures 108a, 108b may not span the entire width of respective base sections, and may instead span a portion of said width (as described further below).

In some examples, each of the first base section 102a and the second base section 102b is a right trapezoid shape. It will be appreciated that a right trapezoid may also be referred to as a right-angled trapezoid. A right trapezoid is a shape which has four sides. Two of the side (lines) are parallel to each other. The two parallel lines are at opposite ends of the right trapezoid shape. There is a first connecting line which connects the two parallel lines. The first connecting line forms a right angle with both of the two parallel lines. There is a second connecting line. The second connecting line forms an acute angle with one of the two parallel lines, and an obtuse angle with the other of the two parallel lines. The points at which the first and second connecting lines meet the two parallel lines are the corners of the right trapezoid shape.

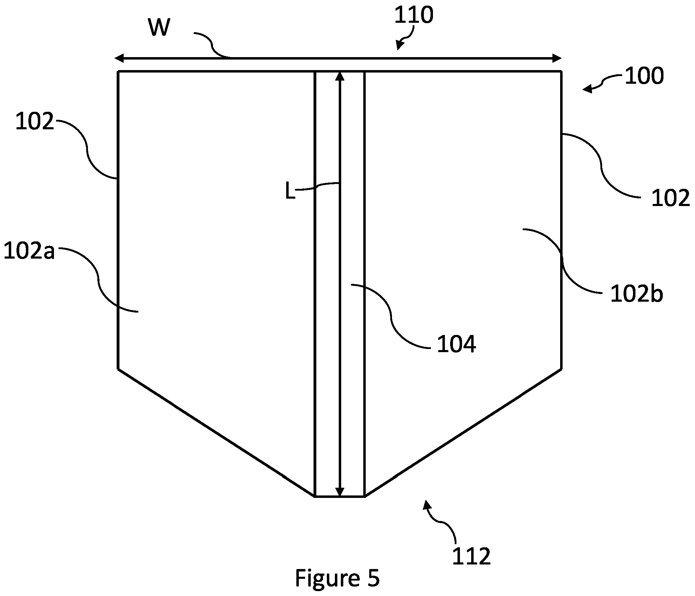

Figure 5 is a schematic plan view of the flashing panel 100 having right trapezoid base portions, according to examples. The examples of the flashing panel 100 in Figure 5 are different to the examples depicted in Figure 1, however, the same reference numerals are used for corresponding features. In these examples, the first base section 102a has a right trapezoid shape such that the above referenced second connecting line (which forms an angle other than 90 degrees with adjacent lines of the right trapezoid) of the respective right trapezoid is positioned towards the second end 112, and the above referenced first connecting line is towards the first end 110 of the flashing panel 100. In these examples, the right trapezoid first base section 102a is arranged such that an acute angle formed by the second connecting line and an adjacent line of the right trapezoid is closer to the centre of the flashing panel 100 than an obtuse angle formed by the second connecting line and another adjacent line of the right trapezoid.

In these examples, the second base section 102b also has a right trapezoid shape such that the above referenced second connecting line (which forms an angle other than 90 degrees with adjacent lines of the right trapezoid) of the respective right trapezoid is positioned towards the second end 112, and the above referenced first connecting line is towards the first end 110 of the flashing panel 100. The second base section 102b basically forms a mirror image, about the centre of the flashing panel 100, of the first base section 102a. In other words, the right trapezoid second base section 102b is arranged such that an acute angle formed by the respective second connecting line and an adjacent line of the right trapezoid is closer to the centre of the flashing panel 100 than an obtuse angle formed by the respective second connecting line and another adjacent line of the right trapezoid of the second base section 102b.

The configuration of Figure 5 provides that the entire interruption 606 is covered by the flashing panel 100, but further to either side of the interruption, the flashing panel 100 does not reach the lowermost edge of the tiles on which the flashing panel 100 is overlaid. Advantageously, such a shape may provide that there is a reduced likelihood of the first and second base sections 102a, 102b being lifted by a wind, and the like. Furthermore, such a shape may also provide greater firmness than if the entire flashing panel extended to the lowermost edges of the relevant tiles.

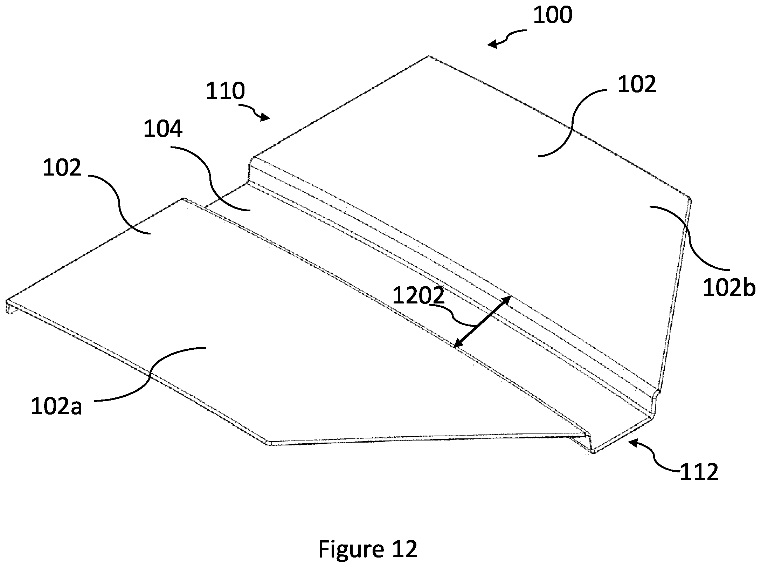

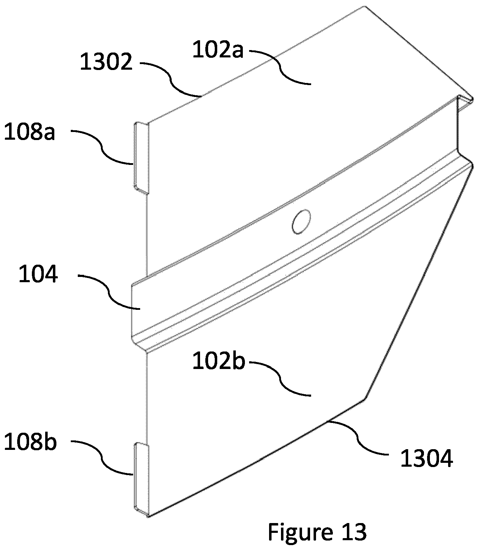

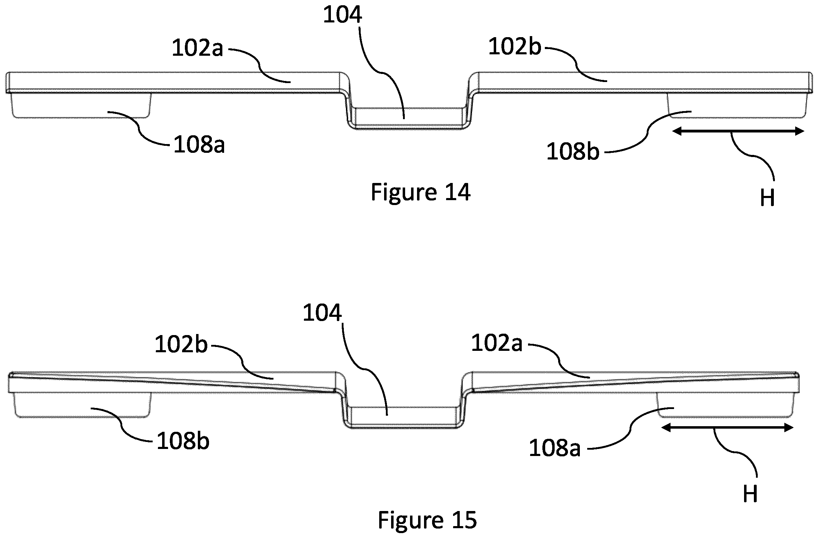

Figure 12 is a schematic perspective view of the of the flashing panel 100 having right trapezoid base portions, according to examples. Figure 13 is a second schematic perspective view of the flashing panel 100 having right trapezoid base portions, according to examples. In the examples of Figure 13, the underside of the flashing panel 100 can be seen. Figure 14 is a third schematic per perspective view of the flashing panel 100 having right trapezoid base portions, according to examples. Figure 14 shows predominantly the rear side of the flashing panel 100. Figure 15 is a fourth schematic per perspective view of the flashing panel 100 having right trapezoid base portions, according to examples. Figure 15 shows predominantly the front side of the flashing panel 100.

In the examples of Figures 12 to 15, certain lines are shown to illustrate example curvatures included in the flashing panel 100 where a transition from one structure to another takes place within the mono-structure (for example, where the flashing panel transitions from one of the base sections into the offset portion 104). Various curvatures may be chosen. In the examples of Figure 12, a width 1202 of the offset portion 104 is indicated. The width 1202 depends, for example, on a corresponding width dimension of the bracket being used. In some examples, the width 1202 is between 45 millimetres and 55 millimetres, preferably 50 millimetres.

In these examples, the hook structures 108a, 108b may not span the entire width of respective base sections. In these examples, the first hook structure 108a is provided towards a first lateral end 1302 of the first base section 102a, which first lateral end 1302 is an end farthest from the offset portion 104. In these examples, the second hook structure 108b is provided towards a second lateral end 1304 of the second base section 102b, which second lateral end 1304 is an end farthest from the offset portion 104. The hook structures provided towards the first and second lateral ends may advantageously provide a secure connection to the underlaying tiles such that twisting/turning/misalignment of the flashing panel 100 is inhibited. The width of the hook structures 108a, 108b may be selected according to similar considerations. In some examples, the width H of the hook structures is between 45 millimetres and 55 millimetres, preferably 49 millimetres.

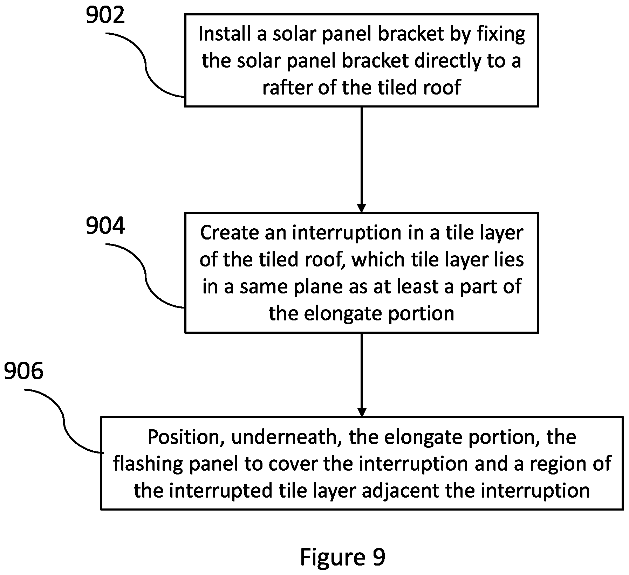

In some examples, there may be provided a method for installing a flashing panel onto a tiled roof at a location of a solar panel bracket. For example, the flashing panel may be the flashing panel 100 according to any of the described examples. Figure 9 is a flow diagram illustrating said method, according to examples. At block 902 of the method 900 of Figure 9, the solar panel bracket (for example, the described bracket 608) is installed by fixing the solar panel bracket directly to a rafter of the tiled roof. In these examples, the solar panel bracket comprises the described elongate portion 608a. The solar panel bracket may also interchangeably be referred to as the bracket 608. Those skilled in the art will appreciate that the bracket 608 shown in the Figures is merely an example of a bracket that may be used. Other examples are possible. The described flashing panel may at least be advantageous for any bracket having an elongate portion, at least a part of which lies in the same plane as the interrupted tile layer. It will be appreciated that differences in the configuration of the bracket (other than the presence of the elongate portion) may not remove the advantages provided by the described flashing panel.

Referring to Figures 6 and 7, in these examples, the bracket 608 comprises a fixing portion 608b. The fixing portion 608b is configured to be fixed to the rafter by means of fixings such as nails, screws, and the like. For example, the fixing portion 608b may have through holes (not shown) to receive screws which are screwed into the rafter.

At block 904 of the method 900, an interruption is created in a tile layer of the tiled roof, which tile layer lies in a same plane as at least a part of the elongate portion 608a. The interruption is created by removing a portion of a tile to create the interrupted tile layer. In the case of the examples of Figure 6, it is a portion of the first tile 602a that is removed. For example, the first tile 602a may be removed prior to the bracket 608 being installed. In these examples, an entire column of length from the topmost edge 704 to the bottommost edge of the first tile 602a. For example, the cut first tile 602a may be replaced before, or after, the bracket 608 is installed. The interruption thus created makes space for the elongate portion 608a to be accommodated.

In some examples, the method 900 comprises removing an overlapping tile from an upper tile layer (e.g., the upper tile layer 702) which overlays and contacts the tile layer in which the interruption is to be created, prior to installation of the bracket 608. For example, depending on the shape, configuration, etc. of the bracket 608, one or more tiles of the upper layer 702 may be removed in order for the bracket to be installed and/or to allow removal of, for example, the first tile 602a to be cut.

For example, the portion of the first tile 602a which is removed to create the interruption has a width greater than or equal to a width of the elongate portion. As referred to herein, the width of the elongate portion is the dimension substantially parallel to the gap between the first and the second tiles 602a, 602, for example, as indicated at 606 in Figure 6.

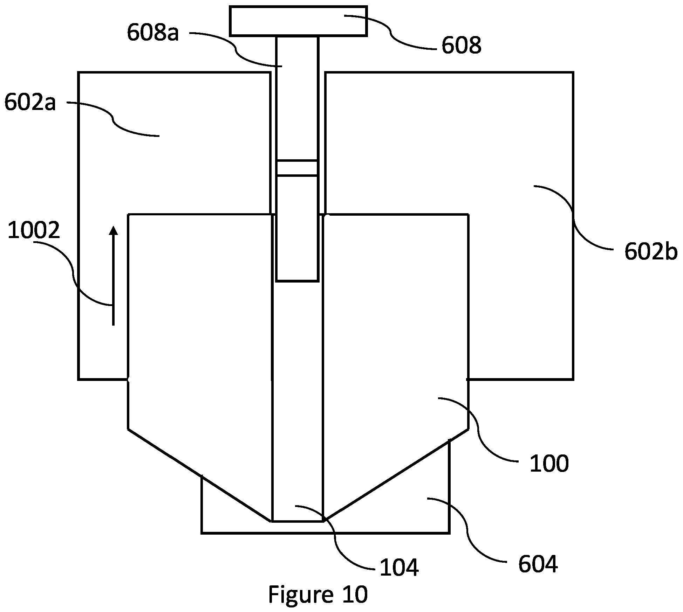

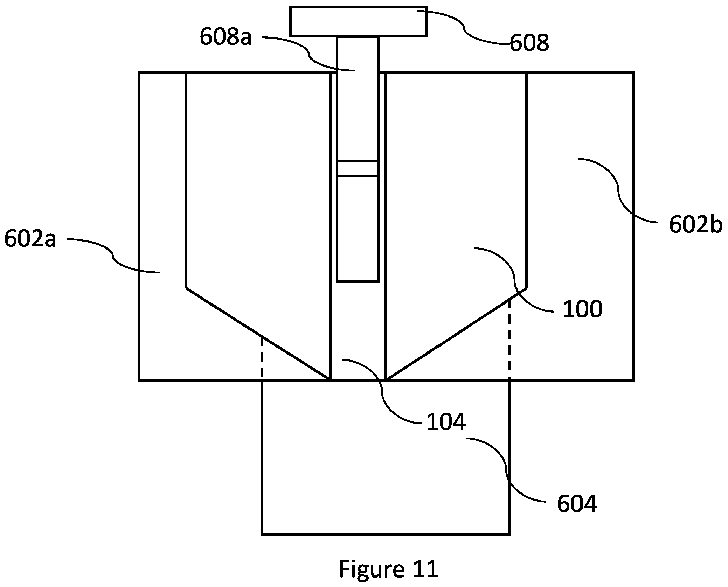

At block 906 of the method 900, the flashing panel is positioned underneath the elongate portion 608a. For example, the flashing panel is positioned to cover the interruption and a region of the interrupted tile layer adjacent the interruption. The flashing panel used in the method 900 is the flashing panel according to any of the examples described herein. Figure 10 is a schematic plan view of the flashing panel 100 in the process of installation, according to examples. Figure 11 is a schematic plan view of the flashing panel 100 after installation in its in use position, according to examples.

As previously described, the flashing panel 100 is firm. For example, the flashing panel 100 is rigid and is positioned by the offset portion 104 being slid underneath the elongate portion of the bracket 608. Referring to Figure 10, the flashing panel 100 may be slid as indicated by the arrow 1002, for example. The flashing panel 100 being rigid assists in the sliding because the flashing panel 100 does not deform and fold in on itself when being slid.

In examples, where the flashing panel 100 comprises the described hook arrangement 108, positioning the flashing panel may involve engaging the hook arrangement 108 with the topmost edge 704 of the first and second tiles 602a, 602b, for example.

In some examples, the overlapping tile, or tiles, of the upper tile layer 702 which may have been removed to install the bracket 608 are replaced after the flashing panel 100 has been positioned to cover the interruption.

It should be noted that the Figures are schematic in nature and are for illustrating certain features. The Figures do not necessarily indicate sizes, relative proportions, separations, angles and the like.

In the above description, various specific examples are described. Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing example(s). The invention extends to any novel one, or any novel combination, of the features disclosed in this specification (including any accompanying claims, abstract and drawings), or to any novel one, or any novel combination, of the steps of any method or process so disclosed.

## Claims

1. A flashing panel for covering an interruption in an interrupted tile layer of a tiled roof, the interruption being where a portion of a tile of the interrupted tile layer is removed, the flashing panel comprising:
a panel base comprising a first base section and a second base section; and
an offset portion connecting the first base section to the second base section, wherein:
the offset portion is configured to extend away from the panel base;
the flashing panel is firm; and
the panel base is configured to lie on top of and to contact the interrupted tile layer, the offset portion is configured to be positioned in the interruption of the interrupted tile layer such that the offset portion lies closer to a lower tile layer than the panel base, the interrupted tile layer overlaid on and in contact with the lower tile layer.

2. The flashing panel according to claim 1, comprising:
a contact side facing a direction in which the offset portion extends away from the panel base,
wherein:
the flashing panel is configured such that substantially all of the contact side contacts the tiled roof.

3. The flashing panel according to claim 2, wherein:
the flashing panel is configured with a complementary curvature corresponding to a tile curvature of tiles of the tiled roof.

4. The flashing panel according to any one of the preceding claims, comprising:
a hook arrangement configured to hook a tile edge of the tiled roof.

5. The flashing panel according to claim 4, wherein:
the hook arrangement is configured to support the flashing panel against gravity when the hook arrangement hooks the tile edge of the tiled roof.

6. The flashing panel according to claim 4 or claim 5, wherein:
the hook arrangement comprises:
a first hook structure provided on the first base section; and
a second hook structure provided on the second base section.

7. The flashing panel according to any one of the preceding claims, wherein:
the flashing panel comprises an injection mouldable material which has been cured.

8. The flashing panel according to any one of the preceding claims, wherein:
the offset portion extends from a first end of the flashing panel to a second end of the flashing panel.

9. The flashing panel according to any one of the preceding claims, wherein:
each of the first base section and the second base section is a right trapezoid shape.

10. The flashing panel according to any one of claims 4 to 6, configured to:
remain in place between adjacent tile layers when the hook arrangement is hooked onto a tile edge of the tiled roof.

11. A method for installing a flashing panel onto a tiled roof at a location of a solar panel bracket, the method comprising:
installing the solar panel bracket by fixing the solar panel bracket directly to a rafter of the tiled roof, the solar panel bracket comprising an elongate portion;
creating an interruption in a tile layer of the tiled roof, which tile layer lies in a same plane as at least a part of the elongate portion, the interruption being created by removing a portion of a tile to create an interrupted tile layer, the portion having a width greater than or equal to a width of the elongate portion;
positioning, underneath the elongate portion, the flashing panel to cover the interruption and a region of the interrupted tile layer adjacent the interruption,
wherein the flashing panel comprises:
a panel base comprising a first base section and a second base section; and
an offset portion connecting the first base section to the second base section, wherein:
the offset portion is configured to extend away from the panel base;
the flashing panel is firm; and
the panel base is configured to lie on top of and to contact the interrupted tile layer, the offset portion is configured to be positioned in the interruption of the interrupted tile layer such that the offset portion lies on a lower tile layer, the interrupted tile layer overlaid on and in contact with the lower tile layer.

12. The method according to claim 11, comprising:
removing an overlapping tile from an upper tile layer which overlays and contacts the tile layer in which the interruption is to be created, prior to installing the solar panel bracket.

13. The method according to claim 12, comprising:
replacing the overlapping tile after the flashing panel has been positioned to cover the interruption.

14. The method according to any one of claims 11 to 13, wherein:
the flashing panel is positioned by the offset portion being slid underneath the elongate portion of the solar panel bracket.

15. The method according to any one of claims 11 to 14, wherein:
positioning the flashing panel comprises engaging a hook arrangement of the flashing panel to a top edge of the interrupted tile layer.
